Europäisches Patentamt

European Patent Office

Office européen des brevets

(11) Veröffentlichungsnummer: **0 314 887**

**A1**

## (12) EUROPÄISCHE PATENTANMELDUNG

(21) Anmeldenummer: 88113363.1

(22) Anmeldetag: 17.08.88

(51) Int. Cl.4: **B62D 1/10** , **B62D 1/04** , **B60K 35/00**

(30) Priorität: 03.11.87 DE 3737165

(43) Veröffentlichungstag der Anmeldung:
**10.05.89 Patentblatt 89/19**

(84) Benannte Vertragsstaaten:
**DE FR GB IT SE**

(71) Anmelder: **BAYERISCHE MOTOREN WERKE AG**
**Postfach 40 02 40 Petuelring 130 - AJ-31**
**D-8000 München 40(DE)**

(72) Erfinder: **Sautter, Wolfgang**
**Riesheimerstrasse 24**
**D-8032 Gräfeling(DE)**
Erfinder: **Mayer, Klaus**
**Kleiberweg 13**
**D-8050 Freising(DE)**
Erfinder: **Trzaska, Klaus**
**Römerstrasse 72**
**D-8031 Gilching(DE)**

(54) **Lenkvorrichtung für Fahrzeuge.**

(57) Lenkvorrichtung für Fahrzeuge, mit einer in einem karosseriefesten Mantelrohr (1) drehbaren Lenkspindel (2). Die Lenkspindel (2) ist mit einem Lenkrad (5) entweder fest oder über ein Getriebe verbunden. Im erstgenannten Fall ist ein im Zentrum des Lenkrades (5) angeordnetes Mittelteil (6) über ein Kegelradgetriebe (Kegelräder 10, 10', 11, 11'), ein Taumelradgetriebe oder eine das Mittelteil mit dem Mantelrohr verbindende Spirale in Ruhestellung gehalten. Im anderen Fall ist das Mittelteil mit dem Mantelrohr fest verbunden und eine Lenkbewegung des Lenkrades wird über ein Stirnradgetriebe oder ein Kegelradgetriebe auf die Lenkspindel übertragen.

*Fig.1*

EP 0 314 887 A1

## Lenkvorrichtung für Fahrzeuge

Die Erfindung betrifft eine Lenkvorrichtung für Fahrzeuge, mit den im Oberbegriff des Hauptanspruchs angegebenen Merkmalen.

Eine derartige Lenkvorrichtung ist bereits mehrfach, beispielsweise aus der DE-OS 34 13 009 bekannt. In dieser Schrift ist die Lenkspindel drehbar in einem Mantelrohr angeordnet. In dem im vorstehenden Bereich an der Lenkspindel befestigten Lenkrad ist im Abstand von der Lenkspindelachse eine Welle drehbar gelagert, die an ihren beiden Stirnseiten mit je einem Zahnrad verbunden ist. Ein Zahnrad der Welle greift in eine Außenverzahnung der Prallplatte und das andere Zahnrad greift in eine Außenverzahnung des Mantelrohres ein. Auf diese Weise wird die Prallplatte beim Verdrehen des Lenkrades zurückgedreht, wodurch die Prallplatte gegenüber dem Mantelrohr stillsteht. Besonders nachteilig ist die Demontage des Lenkrades, die ein Abziehen eines zur drehbaren Abstützung der Prallplatte vorgesehenen Kugellagers von der Lenkspindel erfordert. Der Erfindung liegt die Aufgabe zugrunde, eine Lenkvorrichtung für Fahrzeuge nach dem Oberbegriff des Hauptanspruchs anzugeben, die eine unabhängig von Lenkbewegungen des Lenkrades feststehende Anordnung eines Mittelteiles im Zentrum des Lenkrades ermöglicht. Die Lenkvorrichtung soll auch einen einfachen Aufbau aufweisen und einen Austausch des Lenkrades gegen bekannte Lenkräder ohne feststehendem Mittelteil ermöglichen. Außerdem soll die Lenkvorrichtung spielfrei auszuführen sein und nur einen geringen Platz in der Nabe der Handhabe erfordern.

Diese Aufgabe ist durch die im Kennzeichen des Hauptanspruchs angegebenen Merkmale gelöst. Besonders vorteilhaft ist, daß bei allen im Kennzeichen des Hauptanspruchs alternativ angegebenen Lösungen das Lenkrad beispielsweise zusammen mit dem Mittelteil gegen ein übliches Lenkrad ausgetauscht werden kann. Ein zunächst ohne feststehendem Mittelteil ausgeführtes Lenkrad kann somit nachträglich gegen ein Lenkrad mit einem feststehenden Mittelteil ausgetauscht oder ein feststehendes Mittelteil an dem vorhandenen Lenkrad nachgerüstet werden. Die Lenkvorrichtung kann durch wenige Bauteile genau und kostengünstig gefertigt und spielfrei montiert werden.

Vorteilhafte Ausgestaltungen der Erfindung sind Gegenstand von Unteransprüchen.

Fünf Ausführungsbeispiele der Erfindung werden anhand einer Zeichnung näher erläutert. Es zeigen

Fig. 1 ein erstes Ausführungsbeispiel mit Kegelradpaaren am Umfang der Lenkradnabe,

Fig. 2 ein zweites Ausführungsbeispiel mit einem zur Lenkspindel schräggestellten, auf der Lenkradnabe drehbaren Taumelrad,

Fig. 3 ein drittes Ausführungsbeispiel mit einer Spirale zum Festhalten des Mittelteiles im Lenkrad,

Fig. 4 ein viertes Ausführungsbeispiel mit feststehendem Mittelteil und einem Stirnradgetriebe zur Übertragung der Lenkradbewegungen auf die Lenkspindel und

Fig. 5 ein fünftes Ausführungsbeispiel mit feststehendem Mittelteil und einem Kegelradgetriebe zur Übertragung der Lenkradbewegungen auf die Lenkspindel.

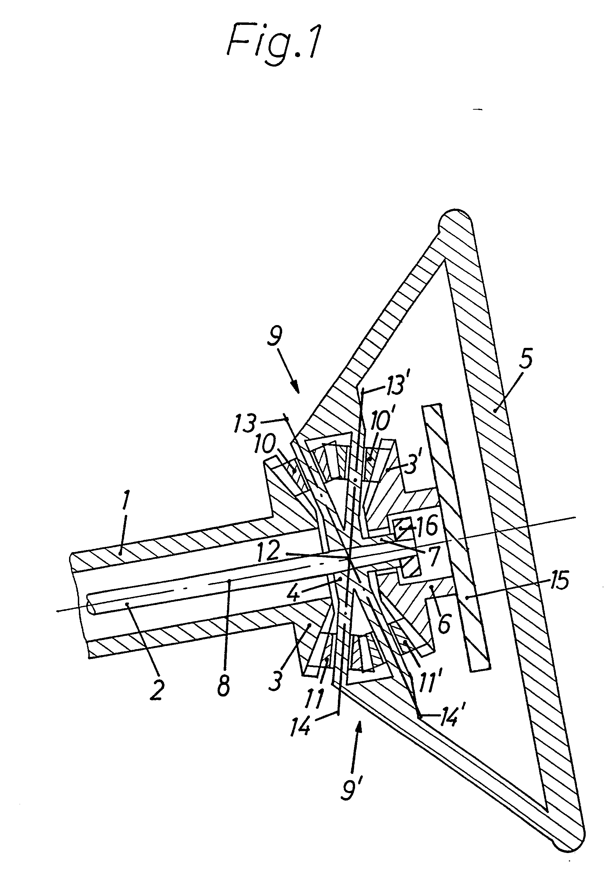

Ein erstes bevorzugtes, in Fig. 1 schematisch dargestelltes Ausführungsbeispiel der Lenkvorrichtung eines Kraftfahrzeugs weist eine in einem karosseriefesten Mantelrohr 1 drehbare Lenkspindel 2 auf, die an ihrem unteren Ende mit einem nicht dargestellten Lenkgetriebe verbunden ist. Die Lenkspindel 2 kann in bekannter Weise aus mehreren Elementen bestehen, die beispielsweise gelenkig oder über elastische Zwischenglieder miteinander verbunden sind. Das Mantelrohr 1 ist in Längsrichtung des Kraftfahrzeugs schräg nach hinten oben gerichtet und an seinem dem Fahrer des Kraftfahrzeugs zugewandten Ende mit einer Kegelverzahnung 3 versehen. Die Lenkspindel 2 ist an ihrem von dem Mantelrohr I vorstehenden Ende mit der Nabe 4 eines Lenkrades 5 verbunden. Dies kann auf unterschiedliche Weise geschehen, wozu die Figur nur schematisch Anhaltspunkte vermittelt. Im Zentrum des Lenkrades 5 ist ein Mittelteil 6 drehbar um einen zylindrischen Vorsprung 7 der Nabe 4 angeordnet, der parallel zur Lenkspindelachse 8 verläuft. Das Mittelteil 6 könnte aber auch auf der Lenkspindel 2 drehbar angeordnet sein. An einem Umfang der Nabe 4 sind mit gleichen Winkelabständen vier Kegelradanordnungen 9, 9$'$ mit je zwei miteinander kämmenden Kegelrädern 10, 10$'$, 11, 11$'$ angeordnet. Jeweils die beiden im Zahneingriff miteinander stehenden Kegelräder 10, 10$'$ bzw. 11, 11$'$ sind bei dem Ausführungsbeispiel entgegengesetzt zur Lenkspindelachse 8 geneigt. Außerdem weisen bei der dargestellten Ausführung alle Kegelräder 10, 10$'$, 11, 11$'$ gleiche Abmessungen auf. Jeweils ein Kegelrad 10, 11 der in Zahneingriff stehenden Kegelräder 10, 10$'$ bzw. 11, 11$'$ greift in die Kegelverzahnung 3 des Mantelrohres 1, während das andere Kegelrad 10$'$, 11$'$ in eine Kegelverzahnung 3$'$ im Mittelteil 6 eingreift. Die Kegelmittelpunkte und die Mittelachsen der Kegelräder 10, 10$'$, 11, 11$'$ und der Kegelverzahnungen 3, 3$'$ schneiden sich in einem Punkt 12 auf der Lenkspindelachse 8. Die Mittelachsen 13, 13', 14, 14' der Kegelräder 10, 10', 11, 11' sind bei dem nur schematisch dargestellten Ausführungsbeispiel durch je einen Zapfen gebildet, der an einem Ende um eine zur jeweiligen Mittelachse senkrechte und zur Lenkspindelachse 8 tangentiale Achse an der Nabe 4 des Lenkrades 5 schwenkbar ist. Jeweils die beiden Achsen von zwei Zapfen, die miteinander kämmende Kegelräder 10, 10' bzw. 11, 11' aufnehmen, können an einem gemeinsamen Stützkörper ausgebildet sein, der mit der Nabe des Lenkrades verbindbar ist. Um das Lenkrad 5 von der Lenkspindel 2 abnehmen zu können, ist bei dem Ausführungsbeispiel das Mittelteil mit einer abnehmbaren Platte 15 versehen. Wird die Platte 15 abgenommen, so kann die auf die Lenkspindel 2 aufgeschraubte Gewindemutter 16 gelöst und das Lenkrad 5 abgenommen werden. Der Austausch des Lenkrades 5 gegen ein anderes Lenkrad, beispielsweise ohne feststehendem Mittelteil, und umgekehrt, ist somit ohne weiteres möglich. Selbstverständlich sind die Kegelräder entgegen der Darstellung so gekapselt angeordnet, daß eine Verletzungsgefahr oder ein Eintritt von Fremdkörpern in die Verzahnungen ausgeschlossen ist.

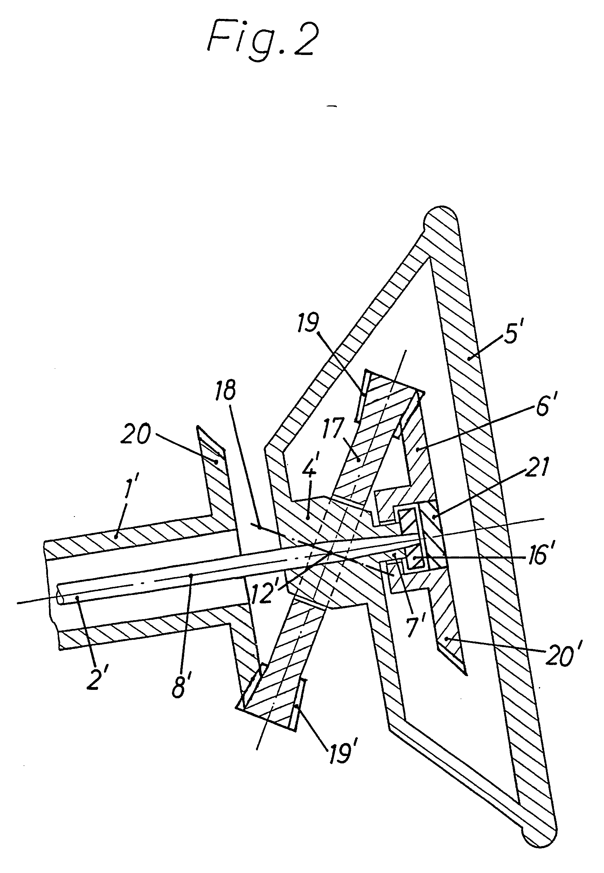

Das in Fig. 2 lediglich im prinzipiellen Aufbau dargestellte zweite Ausführungsbeispiel weist ein gemäß Fig. 1 karosseriefest angeordnetes Mantelrohr 1' auf, in dem ähnlich wie in Fig. 1 eine Lenkspindel 2' drehbar angeordnet und im vorstehenden Bereich mit der Nabe 4' eines Lenkrades 5' verbunden ist. Bei diesem Ausführungsbeispiel ist zum Festhalten eines im Zentrum des Lenkrades 5' auf einem Vorsprung 7' der Nabe 4' um die Lenkspindelachse 8' drehbar angeordneten Mittelteiles 6' eine Taumelscheibe 17 vorgesehen. Die Taumelscheibe 17 ist auf der Nabe 4' um eine zur Lenkspindelachse 8' schräggestellte Drehachse 18 drehbar angeordnet. An beiden Seiten der Taumelscheibe 17 ist je ein umgekehrt kegelstumpfförmiger Zahnkranz 19, 19' ausgebildet. Wenigstens ein Zahn eines Zahnkranzes 19 greift in eine kegelstumpfförmige Verzahnung 20 des Mantelrohres 1' ein. Außerdem befindet sich wenigstens ein Zahn des anderen Zahnkranzes 19' im Zahneingriff mit der kegelstumpfförmigen Verzahnung 20' des Mittelteiles 6'. Die Kegelmittelpunkte und Mittelachsen der Zahnkränze 19, 19' und der Verzahnungen 20, 20' schneiden sich in einem einzigen Punkt 12' auf der Lenkspindelachse 8'. Die beiden Zahnkränze 19, 19' der Taumelscheibe 17 sind symmetrisch zur Mittelebene der Taumelscheibe 17 an dieser angeordnet. Auch bei diesem Ausführungsbeispiel sind die Zahnkränze 19, 19' und die Verzahnungen 20, 20' anders als in der Zeichnung dargestellt gekapselt, so daß keine Gefahr einer Verletzung oder des Eindringens von Fremdkörpern in die Verzahnungen besteht. Ein Austausch des Lenkrades 5' kann beispielsweise wie im Ausführungsbeispiel durch Abnahme eines eine zentrale Öffnung im Mittelteil 6' verschließenden Deckels 21 und Lösen der Gewindemutter 16' erfolgen.

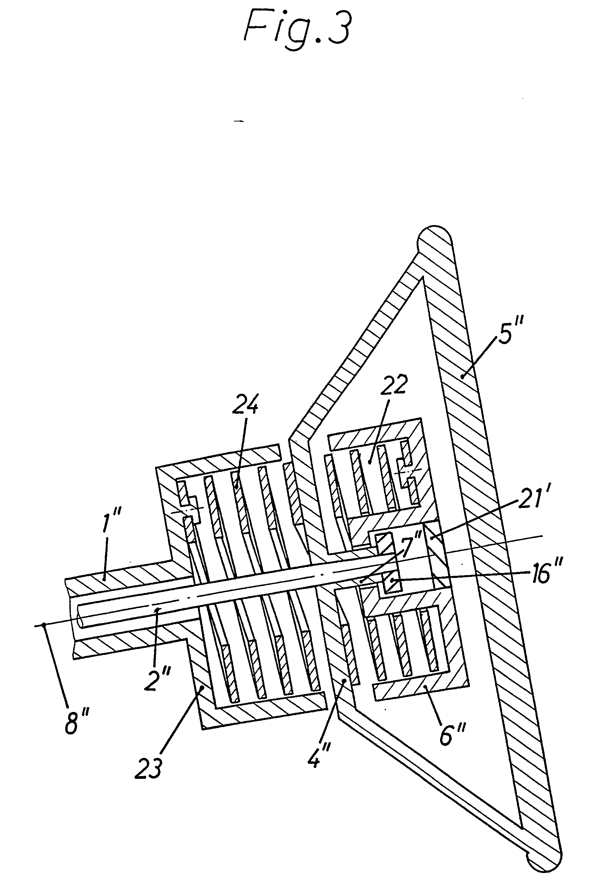

Ein drittes Ausführungsbeispiel der Erfindung ist in Fig. 3 abgebildet. Dieses weist ebenfalls eine in einem karosseriefesten Mantelrohr 1'' drehbare Lenkspindel 2'' auf, die an ihrem vorstehenden Ende mit einer Nase 4'' eines Lenkrades 5'' verbunden ist. Die Nabe weist einen zylindrischen, zur Lenkspindelachse parallelen Vorsprung 7'' auf, der zum Fahrer des Kraftfahrzeugs gerichtet ist. Auf dem Vorsprung 7'' ist ein Mittelteil 6'' um die Lenkspindelachse 8'' drehbar angeordnet. Bei dem Ausführungsbeispiel weist das topfförmig ausgebildete Mittelteil 6'' einen zur Nabe 4'' offenen Ringraum 22 auf. Auf der dem Fahrer abgewandten Seite der Nabe 4'' ist das Mantelrohr 1'' durch eine radiale Abstufung 23 erweitert und bildet zusammen mit dem Ringraum 22 des Mittelteiles 6'' einen Aufnahmeraum, in dem eine schraubenzylinderförmig gewickelte Spirale 24 koaxial zur Lenkspindel 2'' angeordnet ist. Die Spirale 24 könnte aber auch anders gewickelt sein. Bei dem Ausführungsbeispiel ist ein Ende der Spirale 24 mit dem durch die radiale Abstufung 23 gebildeten Wandabschnitt und das andere Ende der Spirale 24 mit dem Boden des Mittelteiles 6'' verbunden. Durch die Spirale 24 wird das Mittelteil 6'' zu einem Anschlag in Richtung auf den Fahrer des Kraftfahrzeugs belastet. Der Anschlag ist bei dem Ausführungsbeispiel durch eine Gewindemutter 16'' gebildet, die zur Befestigung des Lenkrades 5'' an der Lenkspindel 2'' dient. Die Spirale 24 ist von der Nabe 4 des Lenkrades 5'' durchsetzt. Hierzu ist erforderlich, daß die Nabe 4'' wenigstens eine axiale Durchtrittsöffnung für einen Windungsbereich der Spirale 24 aufweist. Das Mittelteil 6'' wird von der Spirale 24 unabhängig von Lenkradbewegungen in seiner Ausgangslage festgehalten, da die Spirale 24 torsionssteif ausgebildet ist. Da der an der Nabe 4'' anliegende Windungsabschnitt und damit die angrenzenden Windungen der Spirale 24 bei Lenkraddrehungen axial verlagert werden, ist es vorteilhaft, wenn die Spirale 24 federweich ausgebildet ist. In der Figur weist die in einem Längsschnitt dargestellte Spirale 24 rechteckförmige Schnittflächen auf. Ebenso könnte die Spirale 24 auch aus einem Material mit einem anders geformten Querschnitt gebildet sein. Anders als bei dem Ausführungsbeispiel ist es auch möglich, daß die Windungen der Spirale zumindest auf einer Seite radial vorstehende Nasen aufweisen, die in einer Längsnut im Mantelrohr und/oder im Mittelteil axial verschiebbar sind. In diesem Fall kann eine Befestigung der Enden der Spirale 24 an dem Mantelrohr 1'' und an dem Mittelteil 6'' entfallen. Bei dem Ausführungsbeispiel kann das Lenkrad 5'' von der Lenkspindel 2″ abgenommen werden, wenn der eine Vertiefung im Mittelteil 6″ verschließende Deckel 21′ abgenommen und die in der Vertiefung auf die Lenkspindel 2″ stirnseitig aufgeschraubte Gewindemutter 16″ entfernt ist.

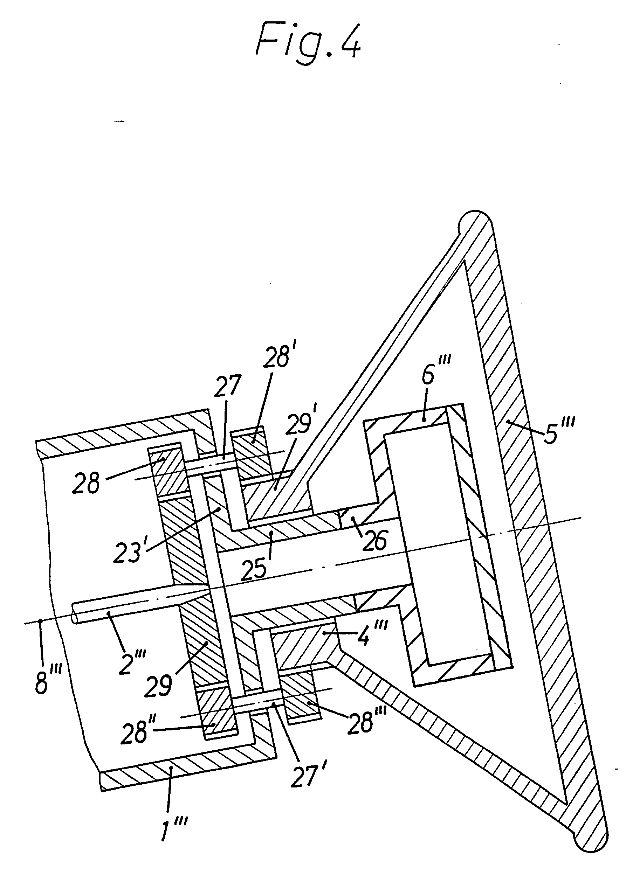

Ein weiteres, viertes Ausführungsbeispiel ist in Fig. 4 dargestellt, bei dem ein im Zentrum des Lenkrades 5‴ angeordnetes Mittelteil 6‴ fest mit einem karosseriefesten Mantelrohr 1‴ verbunden ist. Das Mantelrohr 1‴ ist an dem zum Fahrer des Kraftfahrzeugs gerichteten Ende durch eine radiale Abstufung 23′ verengt ausgebildet. An dem Außenumfang der zylindrischen Verengung 25 ist die Nabe 4‴ des Lenkrades 5‴ koaxial zur Lenkspindelachse 8‴ drehbar angeordnet. Die Verbindung des Mittelteiles 6‴ mit dem Mantelrohr 1‴ kann auf unterschiedliche Weise erfolgen. Bei dem Ausführungsbeispiel ist das Mittelteil 6‴ mit einem im Durchmesser der Verengung 25 entsprechenden zylindrischen Ansatz 26 versehen, der auf eine nicht dargestellte übliche Weise mit der Stirnseite der Verengung 25 verbunden ist. In dem radial erweiterten Bereich des Mantelrohres 1‴ ist eine Lenkspindel 2‴ drehbar angeordnet. Zur Drehverbindung des Lenkrades 5‴ mit der Lenkspindel 2‴ ist ein Getriebe vorgesehen, mit einer in dem durch die radiale Abstufung 23′ gebildeten Wandabschnitt parallel zur Lenkspindelachse 8‴ drehbaren Welle 27. Die Welle 27 ist an ihren beiden von dem Wandabschnitt vorstehenden Enden mit je einem Stirnrad 28, 28′ verbunden, wobei ein Stirnrad 28 mit einem im Stirnbereich mit der Lenkspindel 2‴ verbundenen stirnverzahnten Zahnrad 29 und das andere Stirnrad 28′ mit einem mit der Nabe 4‴ verbundenen stirnverzahnten Zahnrad 29′ im Zahneingriff steht. Anstelle der außenverzahnten Zahnräder 29, 29′ könnten auch Zahnringe mit jeweils einer Innenverzahnung vorgesehen sein, in die das jeweils zugeordnete Stirnrad 28, 28′ eingreift. Das Ausführungsbeispiel ist in der Zeichnung lediglich im prinzipiellen Aufbau dargestellt. Aus Sicherheitsgründen und um ein Eindringen von Fremdkörpern in die Verzahnungen zu vermeiden, ist das Stirnrad 28′ und das Zahnrad 29′, anders als in der Figur dargestellt, gekapselt angeordnet. Das Lenkrad 5‴ kann nach dem Lösen der Verbindung zwischen dem Mittelteil 6‴ und der zylindrischen Verengung 25 des Mantelrohres 1‴ abgenommen werden.

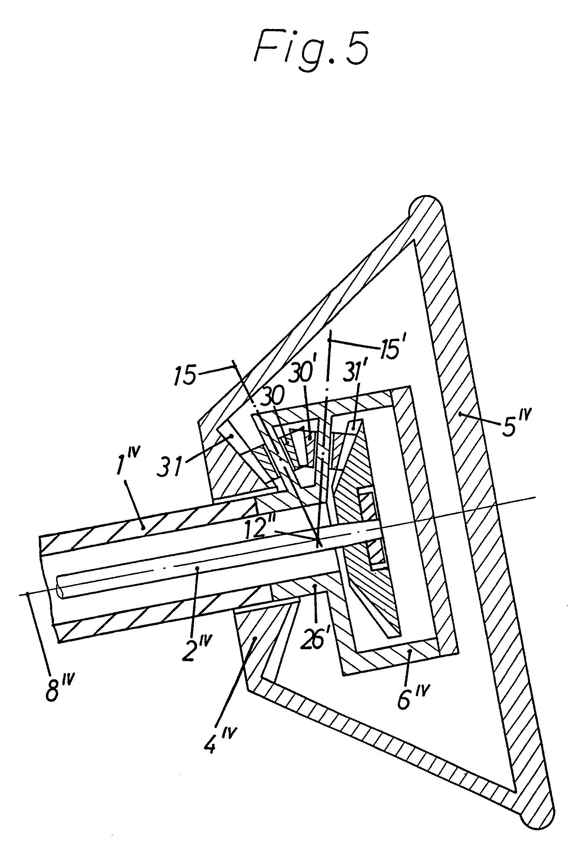

Bei dem in Fig. 5 schematisch dargestellten fünften Ausführungsbeispiel ist das im Zentrum des Lenkrades 5$^{v}$ angeordnete Mittelteil 6$^{v}$ in nicht dargestellter Weise mit einem karosseriefesten Mantelrohr 1$^{v}$ verbunden. Hierzu kann das Mittelteil 6$^{v}$ wie in dem Ausführungsbeispiel einen zylindrischen, an den Durchmesser des Mantelrohres 1$^{v}$ angepaßten zylindrischen Ansatz 26′ aufweisen. Zur Drehübertragung der Lenkradbewegungen auf die in dem Mantelrohr 1$^{v}$ drehbare Lenkspindel 2$^{v}$ ist ein Getriebe vorgesehen, das zwei im Mittelteil 6$^{v}$ unabhängig voneinander drehbare Kegelzahnräder 30, 30′ aufweist, die miteinander im Zahneingriff stehen. Ein Kegelzahnrad 30 greift bei diesem Ausführungsbeispiel in eine entsprechende Kegelverzahnung 31 in der Nabe 4$^{v}$ des Lenkrades 5$^{v}$, wobei die Nabe 4$^{v}$ drehbar auf dem Mantelrohr 1$^{v}$ angeordnet ist. Demgegenüber greift das andere Kegelzahnrad 30′ in eine Kegelverzahnung 31′ der Lenkspindel 2$^{v}$ ein. Die Kegelverzahnung 31′ der Lenkspindel 2$^{v}$ ist an einem in einem Hohlraum im Mittelteil angeordneten Kegelrad ausgebildet, das mit der in den Hohlraum ragenden Lenkspindel 2$^{v}$ verbunden ist. Die Kegelmittelpunkte und Mittelachsen der Kegelzahnräder 30, 30′ und der Kegelverzahnungen 31, 31′ schneiden sich in einem einzigen Punkt 12″ auf der Lenkspindelachse 8$^{v}$. Bei dem Ausführungsbeispiel weisen die Kegelzahnräder 30, 30′ gleiche Abmessungen auf und sind symmetrisch entgegengesetzt zur Lenkspindelachse 8$^{v}$ geneigt. Die Mittelachsen 15, 15′ der Kegelzahnräder 30, 30′ können in nicht dargestellter Weise durch Bolzen, Stifte, Zapfen o.dgl. gebildet sein, die jeweils an einem Ende um eine zur jeweiligen Mittelachse 15, 15′ senkrechte und zur Lenkspindel 2$^{v}$ tangentiale Schwenkachse an dem Mittelteil 6$^{v}$ schwenkbar sind. Anders als bei dem Ausführungsbeispiel könnten die Kegelzahnräder 30, 30′ auch an dem Mantelrohr 1$^{v}$ drehbar angeordnet sein. In diesem Fall sind die Bolzen, Stifte oder Zapfen an dem Mantelrohr 1$^{v}$ schwenkbar angeordnet.

Die Erfindung ermöglicht eine Vielzahl von Ausführungen, von denen nur einige anhand von lediglich schematisch dargestellten Figuren beschrieben sind. Bei der Erfindung wurde insbesondere darauf geachtet, daß das Lenkrad gleichen Drehsinn, gleiche Drehzahl und die gleiche Drehachse wie die Lenkspindel haben kann, so daß ein Austausch des Lenkrades gegen ein anderes Lenkrad mit oder ohne feststehend angeordnetem Mittelteil erleichtert ist.

**Ansprüche**

1. Lenkvorrichtung für Fahrzeuge, mit einer in einem karosseriefesten Mantelrohr drehbaren Lenkspindel, die mit einer Nabe eines Lenkrades verbunden ist, und mit einem im Zentrum des Lenkrades von einer Halteeinrichtung in Ruhelage festgehaltenen Mittelteil, dadurch gekennzeichnet, daß die Halteeinrichtung zwei in der Nabe (4) unabhängig voneinander drehbar angeordnete und miteinander kämmende Kegelräder (10, 10′, 11, 11′) aufweist, von denen ein Kegelrad (10, 11) in eine Kegelverzahnung (3) im Mantelrohr (1) und das andere Kegelrad (10′, 11′) in eine Kegelverzahnung

(3′) im Mittelteil (6) eingreift, wobei sich die Kegelmittelpunkte und Mittelachsen der Kegelräder (10, 10′, 11, 11′) und der Kegelverzahnungen (3, 3′) in einem einzigen Punkt (12) auf der Lenkspindelachse (8) schneiden, oder daß die Halteeinrichtung eine auf der Nabe (4) drehbare Taumelscheibe (17) mit zur Lenkspindelachse (8′) schräggestellter Drehachse (18) aufweist, wobei die Taumelscheibe (17) an beiden Seiten mit je einem umgekehrt kegelstumpfförmigen Zahnkranz (19, 19′) versehen ist und über einen Zahnkranz (19) mit einer kegelstumpfförmigen Verzahnung (20) des Mantelrohres (1′) und über den anderen Zahnkranz (19′) mit einer kegelstumpfförmigen Verzahnung (20′) des Mittelteiles (6′) kämmt, wobei sich die Kegelmittelpunkte und Mittelachsen der Zahnkränze (19, 19′) und der Verzahnungen (20, 20′) in einem einzigen Punkt (12′) auf der Lenkspindelachse (8′) schneiden, oder daß die Halteeinrichtung eine torsionssteife, zur Lenkspindel (2″) koaxiale Spirale (24) aufweist, die zumindest verdrehsicher mit dem Mantelrohr (1″) und mit dem Mittelteil (6″) verbunden ist, wobei sich die Nabe (4′) des Lenkrades (5″) zwischen den Windungen der Spirale (24) bewegt, oder daß das Mittelteil (6‴, 6ⅳ) mit dem Mantelrohr (1‴, 1ⅳ) fest verbunden ist und das Lenkrad (5‴, 5ⅳ) um die Lenkspindelachse (8‴, 8ⅳ) drehbar auf dem Mantelrohr (1‴, 1ⅳ) oder dem Mittelteil angeordnet und über ein Getriebe mit der Lenkspindel (2‴, 2ⅳ) verbunden ist.

2. Lenkvorrichtung für Fahrzeuge nach Anspruch 1, dadurch gekennzeichnet, daß die Kegelräder (10, 10′, bzw. 11, 11′) symmetrisch entgegengesetzt zur Lenkspindelachse (8) geneigt sind und gleiche Abmessungen aufweisen.

3. Lenkvorrichtung für Fahrzeuge nach Anspruch 1, dadurch gekennzeichnet, daß an einem Umfang der Nabe (4) etwa mit gleichen Winkelabständen wenigstens drei Kegelradanordnungen mit je zwei miteinander kämmenden Kegelrädern (10, 10′, bzw. 11, 11′) vorgesehen sind.

4. Lenkvorrichtung für Fahrzeuge nach Anspruch 1, dadurch gekennzeichnet, daß die Mittelachsen der Kegelräder durch je einen Zpafen gebildet sind, der an einem Ende um eine zur jeweiligen Mittelachse senkrechte und zur Lenkspindel tangentiale Achse an der Nabe des Lenkrades schwenkbar ist.

5. Lenkvorrichtung für Fahrzeuge nach Anspruch 1, dadurch gekennzeichnet, daß die beiden kegelstumpfförmigen Zahnkränze (19, 19′) der Taumelscheibe (17) symmetrisch zur Mittelebene der Taumelscheibe (17) angeordnet sind.

6. Lenkvorrichtung für Fahrzeuge nach Anspruch 1, dadurch gekennzeichnet, daß die Spirale (24) mit konstantem Windungsdurchmesser schraubenförmig gewickelt ist.

7. Lenkvorrichtung für Fahrzeuge nach Anspruch 1, dadurch gekennzeichnet, daß die Spirale (24) federweich ausgebildet ist.

8. Lenkvorrichtung für Fahrzeuge nach Anspruch 6, dadurch gekennzeichnet, daß die Windungen der Spirale (24) zumindest auf einer Seite radial vorstehende Nasen aufweisen, die in einer Längsnut im Mantelrohr (1″) und/oder im Mittelteil (6″) axial verschiebbar sind.

9. Lenkvorrichtung für Fahrzeuge nach Anspruch 1, dadurch gekennzeichnet, daß das Getriebe wenigstens eine in einem radialen Wandabschnitt (Abstufung 23′) des Mantelrohres (1‴) parallel zur Lenkspindelachse (8‴) drehbare Welle (27, 27′) aufweist, die an ihren beiden vorstehenden Enden mit je einem Stirnrad (28, 28′ bzw. 28″, 28‴) verbunden ist, wobei ein Stirnrad (28, 28′) mit einem mit der Lenkspindel (2‴) verbundenen Zahnrad (29) und das andere Stirnrad (28′, 28‴) mit einem mit dem Lenkrad (5‴) verbundenen Zahnrad (29′) im Zahneingriff steht.

10. Lenkvorrichtung für Fahrzeuge nach Anspruch 9, dadurch gekennzeichnet, daß die beiden Zahnräder Zahnringe mit einer Innenverzahnung sind.

11. Lenkvorrichtung für Fahrzeuge nach Anspruch 1, dadurch gekennzeichnet, daß das Getriebe zwei im Mantelrohr oder im Mittelteil (6ⅳ) unabhängig voneinander drehbare, miteinander kämmende Kegelzahnräder (30, 30′) aufweist, von denen ein Kegelzahnrad (30) in eine Kegelverzahnung (31) des Lenkrades (5ⅳ) und das andere Kegelzahnrad (30′) in eine Kegelverzahnung (31′) der Lenkspindel (2ⅳ) eingreift, wobei sich die Kegelmittelpunkte und Mittelachsen (15, 15′) der Kegelzahnräder (30, 30′) und der Kegelverzahnungen (31, 31′) des Lenkrades (5ⅳ) und der Lenkspindel (2ⅳ) in einem einzigen Punkt (12″) auf der Lenkspindelachse (8ⅳ) schneiden.

12. Lenkvorrichtung für Fahrzeuge nach Anspruch 11, dadurch gekennzeichnet, daß die Mittelachsen der Kegelzahnräder durch je einen Bolzen gebildet sind, der an einem Ende um eine zur jeweiligen Mittelachse senkrechte und zur Lenkspindel tangentiale Schwenkachse an dem Mantelrohr oder an dem Mittelteil schwenkbar ist.

5

EP 0 314 887 A1

# Fig.1

# Fig.2

# Fig.3

EP 0 314 887 A1

# Fig.4

# Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 541 301 (ONO)<br>* Ansprüche; Figuren *<br>--- | 1,6,7,8 | B 62 D 1/10<br>B 62 D 1/04<br>B 60 K 35/00 |
| X | PATENT ABSTRACTS OF JAPAN, Band 7, Nr. 16 (M-187)[1161], 22. Januar 1983; & JP-A-57 172 845 (TOYOTA JIDOSHA KOGYO K.K.) 23-10-1982<br>* Zusammenfassung *<br>--- | 1,6,7,8 | |
| X | FR-A-1 008 094 (BAYARD)<br>* Insgesamt *<br>--- | 1,9,10 | |
| X | EP-A-0 188 164 (ACIERS ET OUTILLAGE PEUGEOT)<br>* Ansprüche; Figuren *<br>--- | 1,9,10 | |
| E | DE-A-3 621 226 (DAIMLER-BENZ)<br>* Insgesamt *<br>--- | 1,9,10 | |
| A | FR-A-2 541 644 (TOYOTA)<br>* Ansprüche; Figuren *<br>--- | 1-5 | |
| A | DE-A-3 413 009 (AUDI)<br>* Ansprüche; Figuren *<br>----- | 1-5 | RECHERCHIERTE SACHGEBIETE (Int. Cl.4)<br><br>B 62 D<br>B 60 K |

Der vorliegende Recherchenbericht wurde für alle Patentansprüche erstellt

| Recherchenort | Abschlußdatum der Recherche | Prüfer |
|---|---|---|
| DEN HAAG | 06-01-1989 | PIRIOU J.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument

EPO FORM 1503 03.82 (P0403)